# EUROPÄISCHE PATENTSCHRIFT

(11) **EP 1 539 524 B1**
(45) Veröffentlichungstag und Bekanntmachung des Hinweises auf die Patenterteilung: **27.07.2011**
(21) Anmeldenummer: 03727140.0
(22) Anmeldetag: 14.03.2003
(51) Int. Cl.: B60K 31/04

(54) **VERFAHREN UND VORRICHTUNG ZUR REGELUNG DER GESCHWINDIGKEIT UND MOTORDREHZAHL BEI EINEM KRAFTFAHRZEUG MIT HANDSCHALTGETRIEBE**
METHOD AND DEVICE FOR REGULATING THE SPEED AND ENGINE RPM OF A MOTOR VEHICLE WITH A MANUAL GEARBOX
PROCEDE ET DISPOSITIF DE REGULATION DE LA VITESSE ET DU REGIME DU MOTEUR D'UN VEHICULE AUTOMOBILE A BOITE DE VITESSES MANUELLE

(30) Priorität: 13.09.2002 DE 10242684
(43) Veröffentlichungstag der Anmeldung: 15.06.2005
(73) Patentinhaber: ROBERT BOSCH GMBH, 70442 Stuttgart (DE)
(72) Erfinder: ERHART, Robert, 71254 Ditzingen (DE); HELLMANN, Manfred, 71706 Hardthof (DE)
(86) Internationale Anmeldenummer: PCT/DE2003/000822
(87) Internationale Veröffentlichungsnummer: WO 2004/026612

(56) Entgegenhaltungen:
- WO-A-00/06410
- DE-A- 19 622 638

## Beschreibung

### Stand der Technik

Für Kraftfahrzeuge sind Verfahren und Vorrichtungen bekannt, mit denen die Geschwindigkeit des Fahrzeugs automatisch auf eine vom Fahrer gewählte Wunschgeschwindigkeit geregelt werden kann. Bei adaptiven Geschwindigkeitsregelsystemen (ACC; Adaptive Cruise Control) ist darüber hinaus eine automatische Anpassung der Geschwindigkeit an die Geschwindigkeit eines vorausfahrenden Fahrzeugs möglich, das mit Hilfe eines Abstandssensors, beispielsweise eines Radarsensors geortet wird (SAE-Paper Nr. 96 10 10 "Adaptive Cruise Control, System Aspects and Development Trends", Winner et al., 1996). Die Regelung erfolgt durch Eingriff in das Antriebssystem und erforderlichenfalls auch durch Eingriff in das Bremssystem des Fahrzeugs. Bei Fahrzeugen mit Handschaltgetriebe kann die Regelfunktion, soweit sie das Antriebssystem betrifft, jedoch nicht fortgesetzt werden, wenn der Fahrer die Kupplung betätigt, weil dann die als Rückkopplungssignal verwendete Ist-Geschwindigkeit des Fahrzeugs nicht mehr durch die Stellbefehle des Reglers beeinflußt werden kann. Bei Fahrzeugen mit Handschaltgetriebe ist es deshalb bisher üblich, die Regelfunktion bzw. ACC-Funktion abzuschalten, sobald der Fahrer die Kupplung betätigt. Um nach einem Gangwechsel die Regelfunktion wieder zu aktivieren, muß der Fahrer von Hand einen entsprechenden Befehl eingeben.

Zwar wäre es wünschenswert, nach einem Gangwechsel die Regelfunktion automatisch wieder aufzunehmen, doch wird dann im allgemeinen die Motordrehzahl nicht an die Ist-Geschwindigkeit und an die neu gewählte Getriebestufe angepaßt sein, so daß beim Wiedereinkuppeln ein ale irritierend und unkomfortabel empfundener Ruck auftritt.

Ein gattungsgemässen Verfahren wird in der WO 00/06410 beschrieben. Vorteile der Efindung

Das Verfahren mit den in Anspruch 1 angegebenen Merkmalen und die Vorrichtung mit den im ersten Vorrichtungsanspruch angegebenen Merkmalen bieten demgegenüber den Vorteil, daß nach einem Gangwechsel die Regelfunktion automatisch wieder aufgenommen werden kann und dabei in den meisten praktischen Fällen der Ruck beim Wiedereinkuppeln erheblich gemildert oder ganz vermieden werden kann.

Wenn die Regelfunktion aktiv ist, wird bei dem erfindungsgemäßen Verfahren anhand verschiedener Eingangsgrößen, beispielsweise der Motordrehzahl, des Motordrehmoments, der geschätzten Fahrbahnsteigung, des Bremsdruckes, der Dauer der Bremsbetätigung etc. die Wahrscheinlichkeit (Hochschaltwahrscheinlichkeit) geschätzt, daß der Fahrer in die nächsthöhere Getriebestufe schaltet. Diese Schätzung kann fortlaufend während des Regelbetriebs geschehen oder spätestens bei Betätigung der Kupplung. Solange die Verbindung zwischen Motor und Antriebsrädern unterbrochen ist, wird die Geschwindigkeitsregelung zumindest bezüglich des Antriebssystems ausgesetzt, und es erfolgt stattdessen eine Regelung der Motordrehzahl gemäß einer zeitabhängigen Funktion, die in Abhängigkeit von der Hochschaltwahrscheinlichkeit und vom Zielgang gewählt wird. Wenn die Hochschaltwahrscheinlichkeit nahezu 1 beträgt, ein Hochschalten also fast sicher ist, wird die Motordrehzahl gemäß einer verhältnismäßig rasch abfallenden Funktion auf den Wert reduziert, der durch die Ist-Geschwindigkeit des Fahrzeugs und das Übersetzungsverhältnis im voraussichtlichen Zielgang, also in der nächsthöheren Getriebestufe, bestimmt ist. Die Änderungsrate ist dabei so gewählt, daß die erforderliche Zieldrehzahl während der normalen Dauer einer Kupplungsbetätigung erreicht wird, so daß beim Wiedereinkuppeln ein ruckfreier Übergang in den Regelbetrieb sichergestellt wird. Wenn dagegen die Hochschaltwahrscheinlichkeit kleiner ist, so daß es ungewiß ist, ob der Fahrer wirklich hochschalten oder herunterschalten will, so wird die Motordrehzahl mit kleinerer Änderungsrate reduziert. Das hat zur Folge, daß beim Wiedereinkuppeln die für den nächsthöheren Gang bestimmte Zieldrehzahl noch nicht ganz erreicht sein wird, so daß die Drehzahl zum Zeitpunkt des Wiedereinkuppelns zwischen der bisherigen Drehzahl und dieser Zieldrehzahl liegen wird. Wenn der Fahrer tatsächlich hochschaltet, ergibt sich ein moderater Ruck im Sinne einer Beschleunigung des Fahrzeugs. Schaltet der Fahrer dagegen herunter, ergibt sich ein leichter Ruck im Sinne einer Verzögerung des Fahrzeugs, doch wird dieser Ruck deutlich geringer ausfallen als bei einer vollständigen Anpassung der Drehzahl an den vermeintlichen Zielgang, d.h., an den nächsthöheren Gang. Je kleiner die Hochschaltwahrscheinlichkeit ist, desto langsamer wird die Motordrehzahl während der Betätigungsphase der Kupplung reduziert. Im Extremfall, bei sehr geringer Hochschaltwahrscheinlichkeit, wird die Drehzahl konstant gehalten oder sogar erhöht, so daß der Ruck beim Herunterschalten entsprechend kleiner ausfällt.

Vorteilhafte Ausgestaltungen und Weiterbildungen der Erfindung sind in den Unteransprüchen angegeben.

Es ist vorteilhaft, wenn die Motordrehzahl nicht erhöht, sondern allenfalls reduziert oder konstant gehalten wird, solange ein Hochschalten nicht mit Sicherheit ausgeschlossen werden kann. In diesem Fall wird vermieden, daß eine für den Fahrer unplausible Drehzahlanhebung erfolgt, sobald der Fahrer in der Absicht, hochzuschalten, die Kupplung betätigt. Ergänzend kann mit Hilfe eines Getriebepositionssensors oder durch Vergleich der Motordrehzal mit der Drehzahl am Ausgang des Getriebes oder der Raddrehzahl festgestellt werden, welchen Gang der Fahrer tatsächlich eingelegt hat, und wenn der Fahrer heruntergeschaltet hat, kann die Drehzahl automatisch auf einen der kleineren Getriebestufe entsprechenden Wert angehoben werden, noch bevor der Fahrer die Kupplung losläßt, so daß auch in diesem Fall ein ruckfreier Übergang erreicht wird. Diese Funktion ist in den Fällen sinnvoll, in denen sich aus den Eingangsgrößen, beispielsweise der Fahrbahnsteigung, der Geschwindigkeit des vorausfahrenden Fahrzeugs, etc. schließen läßt, daß der Fahrer herunterschaltet, um rascher beschleunigen zu können oder um bei stärkerer Steigung die Geschwindigkeit zu halten. Wenn dagegen die Eingangsgrößen darauf hindeuten, daß die Fahrzeuggeschwindigkeit beim Wiedereinsetzen der Regelung weiter reduziert wird, ist es zweckmäßig, die Drehzahl nicht anzuheben, damit das Bremsmoment des Motors ausgenutzt werden kann. In den Fällen, in denen der Fahrer herunterschaltet, um den Geschwindigkeitsregler zu übersteuern und zu einem Überholmanöver anzusetzen, wird der Fahrer beim Wiedereinkuppeln ohnehin das Gaspedal betätigen, so daß auch in diesen Fällen eine automatische Anhebung der Drehzahl entbehrlich ist.

Die zeitabhängige Funktion, nach der bei betätigter Kupplung die Motordrehzahl reduziert wird, kann eine lineare Funktion oder wahlweise auch eine nichtlineare Funktion sein. Wenn der Fahrer die Kupplung sehr lange betätigt hält, beispielsweise länger als ein fest oder variabel vorgegebenes Zeitintervall, ist es zweckmäßig, die Motordrehzahl auf die Leerlaufdrehzahl zu reduzieren.

In einer besonders vorteilhaften Ausführungsform wird während der Fahrt fortlaufend aufgezeichnet, wie lange der Fahrer bei einem Gangwechsel die Kupplung betätigt hält, so daß man einen fahrertypischen Mittelwert für die Dauer der Kupplungsbetätigung erhält. Die durch die zeitabhängigen Funktionen bestimmten Änderungsraten der Motordrehzahl und ggf. die Länge des Zeitintervalls, nachdem die Drehzahl auf die Leerlaufdrehzahl reduziert wird, können dann in Abhängigkeit von diesem Mittelwert bestimmt werden, so daß eine Anpassung an das Fahrerverhalten erreicht wird.

### Zeichnung

Ein Ausführungsbeispiel der Erfindung ist in den Zeichnungen dargestellt und in der nachfolgenden Beschreibung näher erläutert.

Es zeigen:
- Figur: 1 ein Blockdiagramm einer Vorrichtung zur Geschwindig- keitsregelung;
- Figur 2: ein Flußdiagramm zur Illustration des Verfahrens zur Geschwindigkeits- und Drehzahlregelung; und
- Figur 3: ein Zeitdiagramm zur Illustration unterschiedlicher Soll-Drehzahlverläufe bei der Regelung der Motordreh- zahl.

### Beschreibung des Ausführungsbeispiels

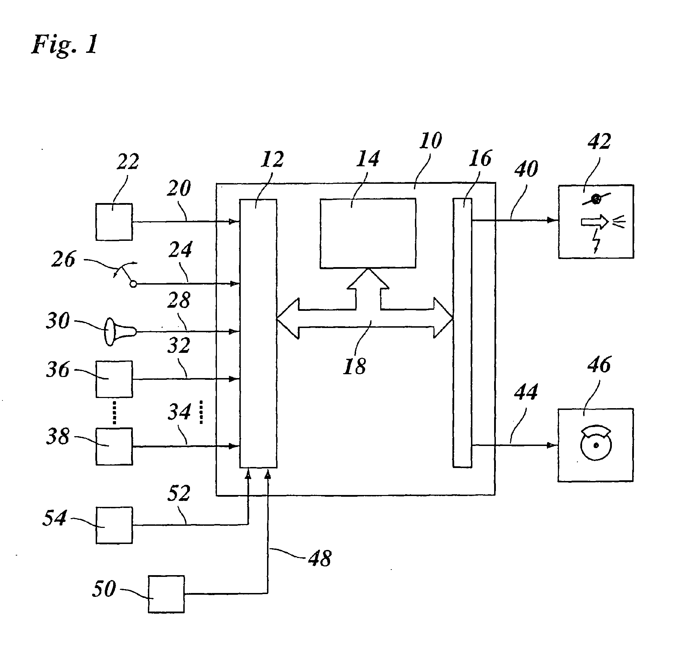

Figur 1 zeigt ein Blockdiagramm einer Steuereinheit 10 für einen adaptiven Fahrgeschwindigkeitsregler. Die Steuereinheit 10 umfaßt dabei eine Eingangsschaltung 12, wenigstens einen Mikrocomputer 14 und eine Ausgangsschaltung 16. Diese Elemente sind über ein Kommunikationssystem 18 zum Daten- und Informationsaustausch miteinander verbunden. Der Eingangsschaltung 12 sind Eingangsleitungen 20 von einer Meßeinrichtung 22 zur Erfassung der Fahrgeschwindigkeit, eine Eingangsleitung 24 von einem vom Fahrer betätigbaren Bedienelement 26 zur Vorgabe des Betriebszustandes des Fahrgeschwindigkeitsreglers und des Sollabstandes, und eine Eingangsleitung 28 von einer Abstandsmeßeinrichtung 30, vorzugsweise einem Radargerät, zugeführt. Über eine Eingangsleitung 48 wird der Eingangsschaltung 12 eine die Drehzahl der Antriebseinheit repräsentierende, von einem Drehzahlsensor 50 erfaßte Größe und über eine Eingangsleitung 52 ein Kupplungsbetätigungssignal eines Kupplungssensors 54 zugeführt. Ferner werden der Eingangsschaltung 12 weitere Eingangsleitungen 32 bis 34 von Meßeinrichtungen 36 bis 38 zur Erfassung weiterer Betriebsgrößen des Fahrzeugs, die bei der adaptiven Fahrgeschwindigkeitsregelung Verwendung finden, zugeführt. Derartige Betriebsgrößen sind beispielsweise Lenkwinkel, Querbeschleunigung, Getriebestufe etc. Im gezeigten Beispiel ist die Meßeinrichtung 36 eine Drehzahl-Vergleichseinrichtung, der über die aktuelle Getriebestufe informiert. Die Steuereinheit 10, dort der wenigstens eine Mikrocomputer 14, beeinflußt im Rahmen der adaptiven Fahrgeschwindigkeitsregelung über wenigstens eine Ausgangsleitung 40 und entsprechende Stellelemente 42 (z. B. elektronisches Motorsteuergerät) die Leistung der Antriebseinheit des Fahrzeugs. Ferner beeinflußt die Steuereinheit 10 in einem bevorzugten Ausführungsbeispiel über eine Ausgangsleitung 44 und entsprechende Stellelemente 46 (z. B. einer Bremsanlage mit ABS/ASR-Elementen) die Bremskraft an den Radbremsen des Fahrzeugs.

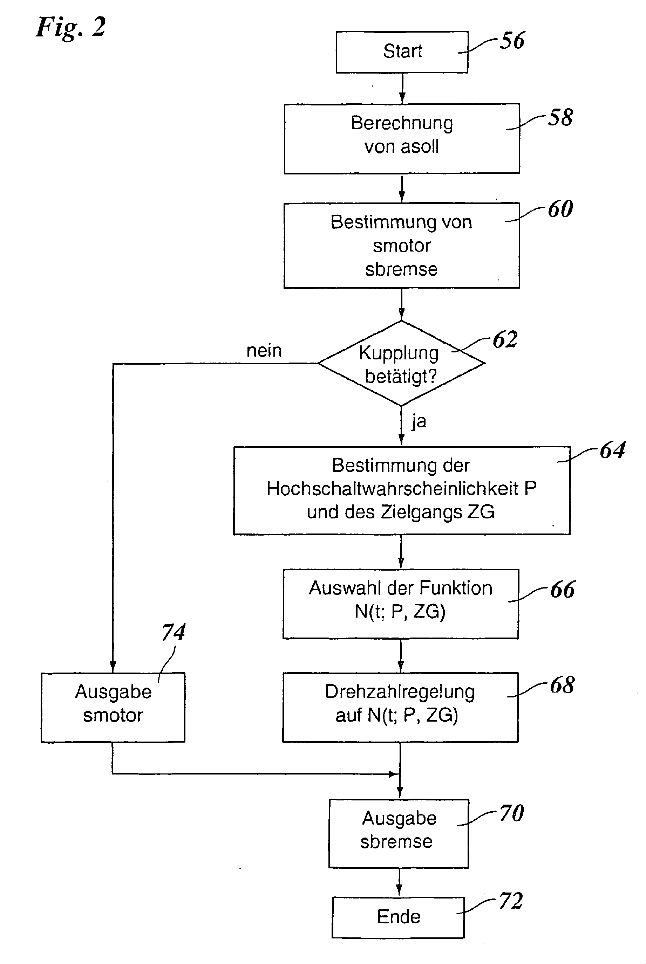

Da die Funktionsweise der Steuereinheit 10 bei der adaptiven Geschwindigkeitsregelung als solche bekannt ist, sind in Figur 2 lediglich die Besonderheiten des erfindungsgemäßen Verfahrens in einem vereinfachten Flußdiagramm dargestellt.

Mit dem Block 56 in Figur 2 beginnt eine Programmroutine, die von dem Mikrocomputer 14 in regelmäßigen zeitabständen in der Größenordnung von einigen Millisekunden ausgeführt wird. In Schritt 58 wird anhand der über die Eingangsleitungen 20, 24, 28, 32, 34 zugeführten Eingangsgrößen eine positive oder negative Sollbeschleunigung asoll berechnet, die je nach Verkehrssituation dazu dient, die vom Fahrer gewählte Wunschgeschwindigkeit oder den Abstand zum vorausfahrenden Fahrzeug einzuhalten. In Schritt 60 wird dann anhand der Sollbeschleunigung asoll eine Stellgröße smotor gebildet, die über die Ausgangsschaltung 16 und die Ausgangsleitung 40 den Stellelementen 42 des Antriebssystems zuzuführen ist. Sofern eine negative Sollbeschleunigung asoll (Verzögerung) gefordert ist und das von der Antriebseinheit erzeugbare Bremsmoment für diese Verzögerung nicht ausreicht, wird in Schritt 60 auch eine Stellgröße sbremse gebildet, die über die Ausgangsschaltung 16 und die Ausgangsleitung 44 den Stellelementen 46 des Bremssystems zuzuführen ist.

In Schritt 62 wird dann anhand des Signals des Kupplungssensors 54 geprüft, ob der Fahrer die Kupplung betätigt hat, Wenn dies der Fall ist, so kann angenommen werden daß der Fahrer einen Gangwechsel beabsichtigt, doch ist noch offen, ob der Fahrer die Getriebestufe erhöhen oder verringern will. Anhand des Signals des Drehzahl-Vergleichseinrichtung ist bekannt, welcher Gang bei Betätigung der Kupplung eingelegt ist. In Schritt 64 wird dann eine Hochschaltwahrscheinlichkeit P berechnet, die angibt, mit welcher Wahrscheinlichkeit der Fahrer die nächsthöhere Getriebestufe als Zielgang ZG auswählen wird. Die Berechnung dieser Wahrscheinlichkeit erfolgt anhand der zur Verfügung stehenden Eingangsgrößen, insbesondere anhand der von der Meßeinrichtung 22 zur Verfügung gestellten Ist-Geschwindigkeit des Fahrzeugs und anhand der vom Drehzahlsensor 50 übermittelten Ist-Drehzahl der Antriebseinheit. Weiterhin können auch Signale der Abstandsmeßeinrichtung 30 Berücksichtigung finden, ebenso die Stellgröße smotor oder andere vom elektronischen Motorsteuergerät zur Verfügung gestellte Signale, die insbesondere über die augenblickliche Last des Motors Auskunft geben. Wenn beispielsweise die Drehzahl des Motors bereits in der Nähe der oberen Grenzdrehzahl liegt, das Getriebe sich noch nicht in der höchsten Getriebestufe befindet und außerdem die Abstandsmeßeinrichtung 30 kein Hindernis meldet, das Anlaß zu einer Verzögerung des Fahrzeugs bieten würde, so ist es praktisch sicher, daß der Fahrer hochschalten will, und die Hochschaltwahrscheinlichkeit P hat den Wert 1. Wenn dagegen der Motor bereits untertourig läuft und die Last relativ hoch ist, z.B. auf Steigungsstrecken, und/oder wenn im Rahmen der Abstandsregelung eine Verringerung der Fahrzeuggeschwindigkeit erforderlich ist, ist es nahezu sicher, daß der Fahrer herunterschalten wird, und die Hochschaltwahrscheinlichkeit P hat den Wert 0. In andere Situationen, beispielsweise bei mittlerer Drehzahl und mittlerer Last, wird die Hochschaltwahrscheinlichkeit P einen mittleren Wert zwischen 0 und 1 haben, der anhand vorgegebener Kriterien vom Mikrocomputer 14 zu bestimmt wird.

In einer modifizierten Ausführungsform kann der Schritt 64 auch vor dem Schritt 62 ausgeführt werden. Das bedeutet, daß die Bestimmung der Hochschaltwahrscheinlichkeit P fortlaufend in jedem Programmzyklus erfolgt, so daß die Hochschaltwahrscheinlichkeit bei Betätigung der Kupplung bereits bekannt ist. In einer weiteren Ausführungsform ist es auch möglich, anhand der fortlaufend überprüften Kriterien, die dem Schritt 64 zugrundeliegen, eine Schaltaufforderung an den Fahrer auszugeben, wenn aufgrund der aktuellen Motorbetriebsbedingungen ein Gangwechsel geboten ist. In diesem Fall kann bei der Bestimmung der Hochschaltwahrscheinlichkeit in Schritt 64 einfach angenommen werden, daß der Fahrer die Schaltaufforderung befolgen wird.

In Schritt 66 wird dann anhand der Hochschaltwahrscheinlichkeit P und anhand des Zielgangs ZG eine Funktion bestimmt, die die Zeitabhängigkeit der Soll-Drehzahl N der Antriebseinheit beschreibt. In Schritt 68 wird dann die Drehzahl der Antriebseinheit auf den durch diese Funktion gegebenen Sollwert geregelt. Je nach Ausführungsform kann diese Regelung im Mikrocomputer 14 erfolgen, indem die über die Eingangsleitung 48 aufgenommene Ist-Drehzahl mit der Soll-Drehzahl verglichen wird und ein entsprechender Stellbefehl über die Ausgangsleitung 40 ausgegeben wird, oder über die Ausgangsleitung 40 wird einfach die Soll-Drehzahl ausgegeben, und die eigentliche Drehzahlregelung bleibt dem elektronischen Motorsteuergerät überlassen.

Falls in Schritt 60 ein von 0 verschiedener Wert für die Stellgröße sbremse bestimmt wurde, wird diese Stellgröße im Anschluß an Schritt 68 in Schritt 70 an die Stellelemente 46 des Bremssystems ausgegeben, bevor der Programmzyklus mit Block 72 beendet wird.

Wenn dagegen in Schritt 62 festgestellt wurde, daß der Fahrer die Kupplung nicht betätigt hat, so werden die Schritte 64 bis 68 übersprungen, und stattdessen wird in Schritt 74 die Stellgröße smotor an die Stellelemente 42 des Antriebssystems ausgegeben, bevor der Schritt 70 ausgeführt wird.

Solange die Kupplung nicht betätigt ist, erfolgt somit die adaptive Geschwindigkeitsregelung durch Eingriff in das Antriebssystem (Schritt 74) und/oder in das Bremssystem (Schritt 70). In den Betriebsphasen, in denen der Fahrer die Kupplung betätigt hält, ist aber bei dem hier beschriebenen Verfahren die adaptive Geschwindigkeitsregelung nur teilweise inaktiviert, d.h., es wird nur der Eingriff in das Antriebssystem unterbunden, während erforderlichenfalls ein Eingriff in das Bremssystem noch möglich ist. Durch diese Ausgestaltung des Verfahrens wird der Fahrer erheblich entlastet, insbesondere in Situationen, in denen das vorausfahrende Fahrzeug relativ stark abbremst. Der Fahrer kann dann in aller Ruhe herunterschalten, um einen der niedrigeren Geschwindigkeit entsprechenden Getriebegang zu wählen, ohne daß während des Schaltvorgangs und der Betätigung der Kupplung die automatische Bremsung des eigenen Fahrzeugs unterbrochen wird.

Die Auswahl der zeitabhängigen Funktion für die Soll-Drehzahl in Schritt 66 hat den Zweck, die Drehzahl während der Phase, in der die Kupplung betätigt ist, automatisch an die dem voraussichtlichen neuen Gang entsprechende Drehzahl anzupassen, so daß beim Loslassen der Kupplung ein möglichst ruckfreier Übergang erreicht wird. Wenn die Hochschaltwahrscheinlichkeit P größer als 0 ist, so ist der Zielgang ZG eine Getriebestufe höher als der aktuell eingelegte Gang, und die Drehzahlfunktion wird so gewählt, daß die Drehzahl näher an den Wert herangeführt wird, der sich aus der Ist-Geschwindigkeit des Fahrzeugs und dem Übersetzungsverhältnis des Getriebes im Zielgang ergibt.

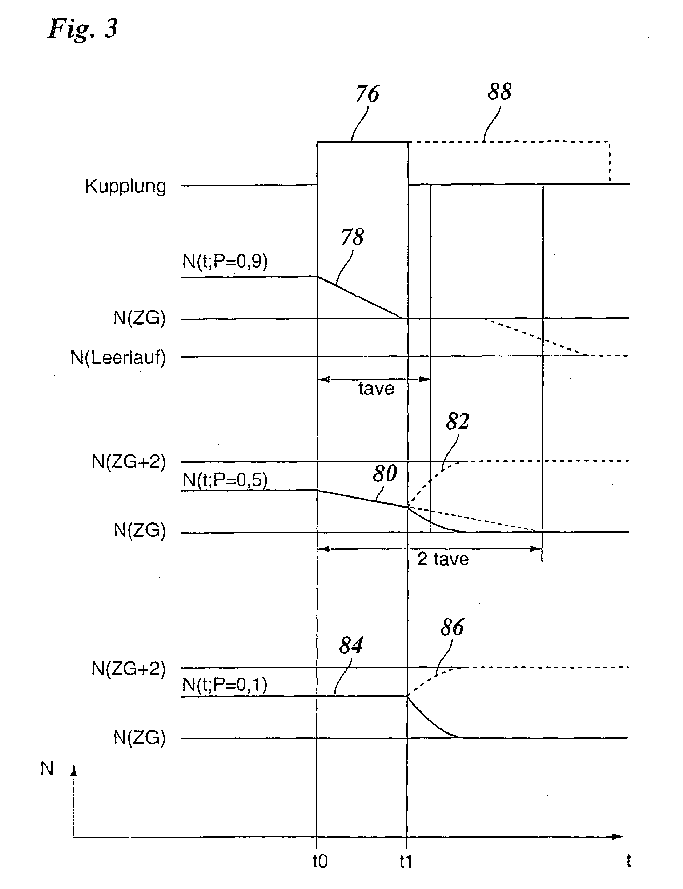

In Figur 3 sind Beispiele für mögliche zeitliche Verläufe der Solldrehzahlfunktion bei unterschiedlichen Hochschaltwahrscheinlichkeiten P graphisch dargestellt. Die obere Kurve 76 in Figur 3 repräsentiert das Signal des Kupplungssensors 54. Die Kupplung wird zum Zeitpunkt t0 betätigt und zum Zeitpunkt t1 wieder losgelassen. Die Kurve 78 repräsentiert die zeitliche Änderung der Soll-Drehzahl N für den Fall, daß eine hohe Hochschaltwahrscheinlichkeit P berechnet wurde (P = 0,9). Bei Betätigung der Kupplung zum Zeitpunkt t0 ist die Soll-Drehzahl gleich der Ist-Drehzahl, die durch die Ist-Geschwindigkeit des Fahrzeugs und das Übersetzungsverhältnis im bisherigen Gang bestimmt ist. Nach dem Zeitpunkt t0 wird die Soll-Drehzahl und damit auch die Ist-Drehzahl des Motors mit relativ steiler Rampe auf den Wert N(ZG) verringert, der durch die Ist-Geschwindigkeit und das Übersetzungsverhältnis im Zielgang, also in der nächsthöheren Getriebestufe, bestimmt ist. Wenn dieser Wert erreicht ist, wird die Drehzahl konstant gehalten, so daß beim Wiedereinkuppeln zum Zeitpunkt t1 ein ruckfreier Übergang erfolgt.

Bei der Bestimmung der Drehzahl N(ZG) werden selbstverständlich auch Änderungen der Ist-Geschwindigkeit berücksichtigt, die innerhalb des Zeitintervalls zwischen t0 und t1 eintreten, beispielsweise aufgrund des Gefälles oder der Steigung der Fahrbahn oder aufgrund eines Bremsmanövers (Schritt 70). Die Rampensteilheit (dN/dt) der Drehzahlfunktion wird jeweils so angepaßt, daß die Zieldrehzahl N(ZG) innerhalb einer bestimmten, von der Hochschaltwahrscheinlichkeit P abhängigen Zeitspanne erreicht wird.

Die Kurve 80 repräsentiert den Fall, daß die Hochschaltwahrscheinlichkeit P einen mittleren Wert hat (P = 0,5). In diesem Fall wird die Rampensteilheit so verringert, daß die Zieldrehzahl N(ZG) erst innerhalb einer größeren Zeitspanne erreicht wird. Dabei wird bewußt in Kauf genommen, daß zum Zeitpunkt des Wiedereinkuppelns bei t1 die Zieldrehzahl noch nicht ganz erreicht ist, so daß ein moderater Ruck auftritt. Der Vorteil besteht jedoch darin, daß in dem Fall, daß der Fahrer nicht hochschaltet, sondern vielmehr herunterschaltet, zum Zeitpunkt des Wiedereinkuppelns noch eine höhere Motordrehzahl vorliegt, so daß der Sprung von der aktuellen Drehzahl auf die höhere Drehzahl N(ZG+2), die dem nächsttieferen Gang entspricht, kleiner ausfällt. Auf diese Weise wird auch beim Herunterschalten ein ruckarmer Übergang erreicht, wie durch die gestrichelt eingezeichnete Kurve 82 illustriert wird.

Generell gilt, daß die Soll-Drehzahl um so langsamer reduziert wird, je kleiner die Hochschaltwahrscheinlichkeit P ist. Die Kurve 84 illustriert den Fall einer sehr kleinen Hochschaltwahrscheinlichkeit (P = 0,1). In diesem Fall wird die Soll-Drehzahl während der Betätigungsdauer der Kupplung konstant gehalten, so daß der Ruck beim nun wahrscheinlicheren Herunterschalten noch kleiner ausfällt (Kurve 86), während in dem Fall, daß der Fahrer doch hochschaltet, nun ein etwas größerer Ruck in Kauf genommen wird.

In Figur 3 ist ein Zeitintervall tave eingezeichnet, das der fahrerspezifischen, aus vorangegangenen Kupplungsbetätigungen bekannten durchschnittlichen Betätigungsdauer der Kupplung entspricht. Bei dem hier beschriebenen Beispiel ist die Rampensteigung (dN/dt) der Solldrehzahlfunktion nicht nur von der Hochschaltwahrscheinlichkeit P, sondern auch von dem Erfahrungswert tave abhängig. Die Zeitspanne, innerhalb derer die Drehzahl nach Betätigung der Kupplung an die jeweilige Zieldrehzahl N(ZG) angepaßt wird, ist jeweils durch einen bestimmten, von P abhängigen Prozentsatz von tave gegeben. Bei großer Hochschaltwahrscheinlichkeit (Kurve 78) beträgt diese Zeitspanne beispielsweise 75& von tave. Dadurch wird ein ruckfreier Übergang auch in dem Fall erreicht, daß, wie im hier gezeigten Beispiel, die tatsächliche Betätigungsdauer der Kupplung etwas kleiner ist als der Durchschnittswert tave.

Bei kleinerer Hochschaltwahrscheinlichkeit, beispielsweise bei P = 0,5 beträgt die Zeitspanne für die Drehzahlanpassung im gezeigten Beispiel 2*tave. Das bedeutet, daß die Drehzahldifferenz zwischen der Ausgangsdrehzahl und der Zieldrehzahl gerade auf die Hälfte abgenommen hat, wenn der Fahrer die Kupplung nach der durchschnittlichen Betätigungsdauer tave wieder losläßt. Auf diese weise wird sowohl beim Hochschalten als auch beim Herunterschalten ein ruckarmer Übergang erreicht.

Wenn der Fahrer die Kupplung sehr lange betätigt hält, wie durch die gestrichelt eingezeichnete Kurve 88 angegeben wird, so wird nach Ablauf einers bestimmten Zeitintervalls nach der Kupplungsbetätigung (bei t0), im gezeigten Beispiel nach 1,5*tave, die Drehzahl weiter auf die Leerlaufdrehzahl N(Leerlauf) reduziert.

Da bei dem hier beschriebenen Verfahren die adaptive Geschwindigkeitsregelung auch während der Betätigungsphase der Kupplung latent aktiv bleibt (Schritte 58, 60 und 74 in Figur 2), können auch Situationen erkannt werden, in denen vorhersehbar ist, daß beim Wiedereinkuppeln der Kupplung und damit bei uneingeschränkter Wiederaufnahme der Geschwindigkeitsregelung eine Verzögerung des Fahrzeugs erforderlich ist und somit ein hohes Bremsmoment des Motors wünschenswert ist. In diesem Fall kann eine Solldrehzahlfunktion so gewählt werden, daß die Drehzahl nach Betätigung der Kupplung schon innerhalb kurzer Zeit auf die Leerlaufdrehzahl N(Leerlauf) zurückgeführt wird, so daß nach dem Wiedereinkuppeln ein hohes Bremsmoment des Antriebssystems zur Verfügung steht.

## Patentansprüche

1. Verfahren zur Regelung der Geschwindigkeit und der Motordrehzahl bei einem Kraftfahrzeug mit Handschaltgetriebe, wobei, wenn der Fahrer bei laufender Geschwindigkeitsregelung die Kupplung betätigt, eine Hochschaltwahrscheinlichkeit (P) dafür berechnet wird, daß der Fahrer die nächsthöhere Getriebestufe als Zielgang (ZG) wählt, und daß bei betätigter Kupplung die Motordrehzahl (N) gemäß einer anhand der Hochschaltwahrscheinlichkeit (P) und des Zielgangs (ZG) ausgewählten zeitabhängigen Funktion geregelt wird und nach dem Lösen der Kupplung die Geschwindigkeitsregelung wieder aufgenommen wird, **dadurch gekennzeichnet, daß** es sich bei der ausgewählten Funktion um eine zeitabhängige Funktion handelt.

2. Verfahren nach Anspruch 1, **dadurch gekennzeichnet, daß** die zeitabhängigen Funktionen, unter denen in Abhängigkeit von der Hochschaltwahrscheinlichkeit (P) ausgewählt wird, einem Konstanthalten oder Verringern der Drehzahl entsprechen.

3. Verfahren nach Anspruch 1 oder 2, **dadurch gekennzeichnet, daß** die zeitabhängigen Funktionen jeweils eine Änderung der Drehzahl auf die durch die Ist-Geschwindigkeit des Fahrzeugs und den Zielgang (ZG) bestimmte Drehzahl. N (ZG) innerhalb einer vorgegebenen Zeitspanne beschreiben.

4. Verfahren nach Anspruch 3, **dadurch gekennzeichnet, daß** die vorgegebenen Zeitspannen für die verschiedenen zeitabhängigen Funktionen um so kleiner sind, je höher die Hochschaltwahrscheinlichkeit (P) ist.

5. Verfahren nach Anspruch 3 oder 4, **dadurch gekennzeichnet, daß** aus den bei wiederholten Kupplungsbetätigungen auftretenden Betätigungsdauern der Kupplung ein Mittelwert (tave) gebildet wird und daß die vorgegebenen Zeitspannen diesem Mittelwert proportional sind, mit einem von der Hochschaltwahrscheinlichkeit (P) abhängigen Proportionalitätsfaktor.

6. Verfahren nach einem der vorstehenden Ansprüche, **dadurch gekennzeichnet, daß** die Motordrehzahl auf die Leerlaufdrehzahl verringert wird, wenn die Kupplung während eines bestimmten Zeitintervalls betätigt bleibt.

7. Verfahren nach den Ansprüchen 5 und 6, **dadurch gekennzeichnet, daß** auch das bestimmte Zeitintervall zu dem Mittelwert (tave) proportional ist.

8. Verfahren nach einem der vorstehenden Ansprüche, **dadurch gekennzeichnet, daß** mit einer Abstandsmeßeinrichtung (10) der Abstand zu einem vorausfahrenden Fahrzeug gemessen wird und die Geschwindigkeit des eigenen Fahrzeugs abstandsabhängig geregelt wird.

9. Verfahren nach Anspruch 8, **dadurch gekennzeichnet, daß** die abstandsabhängige Geschwindigkeitsregelung auch während der Betätigungsdauer der Kupplung fortgesetzt wird, jedoch nur mit Eingriff in das Bremssystem des Fahrzeugs und ohne Eingriff in das Antriebssystem.

## Claims

1. Method for regulating the speed and engine rotational speed of a motor vehicle with a manual gearbox, wherein if the driver actuates the clutch while speed regulation is active, an upshift probability (P) of the driver selecting the next highest gearbox stage as a target gear (ZG) is calculated, and wherein, when the clutch is actuated, the engine rotational speed (N) is regulated according to a time-dependent function selected on the basis of the upshift probability (P) and the target gear (ZG), and the speed regulation is resumed after the clutch is released, **characterized in that** the selected function is a time-dependent function.

2. Method according to Claim 1, **characterized in that** the time-dependent functions from which a selection is made as a function of the upshift probability (P) correspond to a holding-constant or reduction of the rotational speed.

3. Method according to Claim 1 or 2, **characterized in that** the time-dependent functions each describe a change in the rotational speed to the rotational speed N(ZG), determined by the actual speed of the vehicle and the target gear (ZG), within a predefined time period.

4. Method according to Claim 3, **characterized in that** the predefined time periods for the different time-dependent functions are smaller the higher the upshift probability (P) is.

5. Method according to Claim 3 or 4, **characterized in that** a mean value (tave) is formed from the actuation durations of the clutch occurring during repeated clutch actuations, and **in that** the predefined time periods are proportional to said mean value with a proportionality factor dependent on the upshift probability (P).

6. Method according to one of the preceding claims, **characterized in that** the engine rotational speed is reduced to the idle rotational speed if the clutch remains actuated during a determined time interval.

7. Method according to Claims 5 and 6, **characterized in that** the determined time interval is also proportional to the mean value (tave).

8. Method according to one of the preceding claims, **characterized in that** the distance to a preceding vehicle is measured by means of a distance measuring device (30) and the speed of the driver's own vehicle is regulated as a function of the distance.

9. Method according to Claim 8, **characterized in that** the distance-dependent speed regulation is also continued during the actuation duration of the clutch, but only with intervention into the brake system of the vehicle and without intervention into the drive system.

## Revendications

1. Procédé de régulation de la vitesse et du régime du moteur d'un véhicule automobile à boîte de vitesses manuelle, dans lequel, lorsque le conducteur actionne l'embrayage pendant que la régulation de la vitesse est activée, une probabilité de passage à la vitesse supérieure (P) est calculée pour que le conducteur choisisse le rapport de transmission suivant plus élevé comme vitesse cible (ZG), et que lorsque l'embrayage est activé, le régime du moteur (N) soit régulé en fonction d'une fonction dépendant du temps choisie à l'aide de la probabilité de passage à la vitesse supérieure (P) et de la vitesse cible (ZG) et qu'après le relâchement de l'embrayage, la régulation de la vitesse soit à nouveau reprise, **caractérisé en ce que** la fonction sélectionnée est une fonction dépendant du temps.

2. Procédé selon la revendication 1, **caractérisé en ce que** les fonctions dépendant du temps qui sont choisies en fonction de la probabilité de passage à la vitesse supérieure (P), correspondent à un maintien ou à une réduction du régime.

3. Procédé selon la revendication 1 ou 2, **caractérisé en ce que** les fonctions dépendant du temps décrivent à chaque fois une variation du régime au régime N (ZG) déterminé par la vitesse réelle du véhicule et par la vitesse cible (ZG) à l'intérieur d'un intervalle de temps prédéfini.

4. Procédé selon la revendication 3, **caractérisé en ce que** les intervalles de temps prédéfinis pour les différentes fonctions dépendant du temps sont d'autant plus petites que la probabilité de passage à la vitesse supérieure (P) est grande.

5. Procédé selon la revendication 3 ou 4, **caractérisé en ce que** l'on crée une valeur moyenne (tave) à partir des durées d'actionnement de l'embrayage se produisant lors d'actionnements répétés de l'embrayage, et **en ce que** les intervalles de temps prédéfinis sont proportionnels à cette valeur moyenne, avec un facteur de proportionnalité dépendant de la probabilité de passage à la vitesse supérieure (P).

6. Procédé selon l'une quelconque des revendications précédentes, **caractérisé en ce que** le régime du moteur est réduit au régime de ralenti lorsque l'embrayage reste actionné pendant un intervalle de temps déterminé.

7. Procédé selon les revendications 5 et 6, **caractérisé en ce que** l'intervalle de temps déterminé est aussi proportionnel à la valeur moyenne (tave).

8. Procédé selon l'une quelconque des revendications précédentes, **caractérisé en ce que** l'on mesure avec un dispositif de mesure de distance (30) la distance à un véhicule situé devant, et la vitesse du véhicule propre est régulée en fonction de la distance.

9. Procédé selon la revendication 8, **caractérisé en ce que** la régulation de vitesse dépendant de la distance est poursuivie aussi pendant la durée d'actionnement de l'embrayage, mais seulement avec intervention dans le système de freinage du véhicule et sans intervention dans le système d'entraînement.
